# EUROPEAN PATENT APPLICATION

(11) **EP 4 716 233 A1**
(43) Date of publication of application: **25.03.2026**
(21) Application number: 24201431.4
(22) Date of filing: 19.09.2024
(51) Int. Cl.: H04Q 11/00

(54) **A DYNAMIC BANDWIDTH ASSIGNMENT TRIGGERED LOW-POWER MODE**

(71) Applicant: Nokia Solutions and Networks Oy, 02610 Espoo (FI)
(72) Inventor: Tsiaflakis, Paschalis, 2223 Schriek (BE); Verplaetse, Michiel, 9810 Nazareth (BE)
(74) Representative: Ipsilon Belgium

(57) **Abstract**

Example embodiments describe an optical line terminal (110), OLT, configured to communicate in a passive optical network (100), PON, with optical network units (130, 140, 150), ONUs; wherein the OLT comprises a dynamic bandwidth assignment, DBA, engine (111) configured to dynamically assign bandwidths (201) to traffic-bearing entities (131, 132, 141, 151, 152, 153) within the ONUs for a future DBA interval (205 - 208) by allocating transmission opportunities (220) to the traffic-bearing entities within one or more frames (215) of the future DBA interval (205 - 208); wherein a DBA interval comprises at least two successive frames; and characterized in that the OLT is configured to notify, at the latest at the start of a next DBA interval (205), the respective ONUs about one or more low-power opportunities (217, 218) during the next DBA interval; wherein low-power opportunities are periods of one or more successive frames (214, 216) during the next DBA interval (205) without transmission opportunities allocated to the traffic-bearing entities of a respective ONU.

## Description

### Field of the Invention

Various example embodiments relate to energy efficiency in a passive optical network, PON, in particular to low-power management modes of optical network units, ONUs in a PON.

### Background of the Invention

Energy efficiency in passive optical networks, PONs, is typically improved by implementing energy-saving techniques that optimize the power usage of the optical network components, e.g. dynamic bandwidth assignment and low-power management modes.

Dynamic bandwidth assignment, DBA, is a functionality in passive optical networks, PONs, that dynamically assigns bandwidths to traffic-bearing entities of optical network units, ONUs, by allocating transmission opportunities to the respective traffic-bearing entities. The bandwidth assigned to a traffic-bearing entity is typically determined based on the bandwidth demand of the traffic-bearing entity and one or more traffic descriptor parameters provisioned for that traffic-bearing entity. To this end, a DBA engine or module is typically provisioned within an optical line terminal, OLT. The DBA engine typically performs the dynamic bandwidth assignment for a future DBA interval, sometimes also referred to as DBA cycle. This is achieved by predicting the bandwidth demand of the ONUs throughout the future DBA interval and allocating transmission opportunities.

Low-power management modes refer to mechanisms that help reduce power consumption within the PON by intermittently operating ONUs in low-power modes, typically during periods of minimal traffic or inactivity. Typical low-power management modes in PONs include cyclic sleep mode, doze mode, and watchful sleep mode. These low-power management modes have the problem that they are intended for extended periods of minimal or sporadic traffic, as transitioning into or out of the low-power modes requires secondary messaging that can introduce substantial latency and/or jitter. As such, switching to and from these low-power modes affects the quality of service, QoS, significantly as soon as the traffic increases beyond the minimal or sporadic level. Thus, it is a problem that the current low-power management modes do not scale well with traffic and are even non-functional in medium to high traffic.

Another problem is that switching from and to low-power modes is decided by the respective ONUs, based on information that is limited in temporal scope and that is restricted to the traffic at the respective ONUs themselves. Therefore, the low-power modes are applied conservatively which limits the potential power savings.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to provide an improved low-power management mode for optical network units, ONUs, in a passive optical network, PON.

This object is achieved, according to a first example aspect of the present disclosure, by an optical line terminal, OLT, configured to communicate in a passive optical network, PON, with optical network units, ONUs; wherein the OLT comprises a dynamic bandwidth assignment, DBA, engine configured to dynamically assign bandwidths to traffic-bearing entities within the ONUs for a future DBA interval by allocating transmission opportunities to the traffic-bearing entities within one or more frames of the future DBA interval; wherein a DBA interval comprises at least two successive frames; and characterized in that the OLT is configured to notify, at the latest at the start of a next DBA interval, the respective ONUs about one or more low-power opportunities during the next DBA interval; wherein low-power opportunities are periods of one or more successive frames during the next DBA interval without transmission opportunities allocated to the traffic-bearing entities of a respective ONU.

A DBA interval refers to a set of successive frames for which the DBA engine dynamically assigns bandwidths together. A DBA interval may, for example, comprise 32 or 64 successive frames. The respective successive frames may, for example, be physical layer, PHY-, frames. The respective successive frames may have a predetermined length, e.g. 125µs. The DBA intervals may be cyclic, i.e. they may be successively repeated in time. The successive DBA intervals may further have different lengths and/or partially overlap. The DBA engine dynamically assigns bandwidth in advance, i.e. for future DBA intervals. The DBA engine may assign bandwidth for the next DBA interval, i.e. the immediate upcoming DBA interval, or for any subsequent DBA interval, i.e. any future DBA interval after the next DBA interval. Thus, the DBA engine dynamically assigns bandwidths to the traffic-bearing entities of the ONUs by allocating transmission opportunities across a set of future successive frames, e.g. if the DBA interval comprises 64 frames the bandwidths are assigned per set of 64 frames.

After allocating transmission opportunities for a future DBA interval it becomes apparent at the OLT-side during which frames of the future DBA interval there will be no communication in the upstream between the one or more traffic-bearing entities of a certain ONU and the OLT. Periods of successive frames without allocated transmission opportunities are thus excellent candidates for operating the ONU in a low-power mode, as no communication is scheduled. A low-power mode refers to a power-saving operational state of the ONU wherein one or more circuitries of the ONU are not fully responsive and/or active to reduce their energy consumption, e.g. standby, asleep, or turned off completely. The period without allocated transmission opportunities are referred to as low-power opportunities. Low-power opportunities comprise one or more frames. Low-power opportunities may comprise a fractional number or non-integer number of frames, e.g. 3.45 frames.

Notifying the respective ONUs of these low-power opportunities can thus allow the respective ONUs to enter a power-saving state without missing a transmission opportunity by switching to a low-power mode during the low-power opportunities. To this end, the respective ONUs are notified by the OLT about one or more low-power opportunities during the next DBA interval. The ONUs can be notified about one or more low-power opportunities anywhere within the next DBA interval. The notifying occurs at the latest at the start of the next DBA interval, i.e. at the latest within the first downstream frame of the next DBA interval. The notifying may occur earlier, e.g. during the DBA interval preceding the next DBA interval.

This has the advantage that the ONUs can switch from and to a low-power mode without substantial impact on the quality-of-service, QoS, as it does not require secondary messaging that can introduce latency and/or jitter. It is a further advantage that the information already determined by a typical DBA engine is exploited to allow low-power mode management of ONUs in a PON. It is a further advantage that switching from and to low-power modes is driven by the OLT considering extended temporal knowledge of the upcoming traffic schedule. This has the further advantage that low-power modes do not have to be applied conservatively, as it is known in advance when the next communication with the ONU is planned. It is a further advantage that the DBA-triggered low-power modes scale aggressively with the amount of traffic within the PON to optimize energy savings. It is a further advantage that this can easily be implemented in existing PONs.

According to an example embodiment, the OLT may be configured to notify the respective ONUs about low-power opportunities by communicating a number of successive frames until a next transmission opportunity is allocated to a traffic bearing entity of the respective ONUs.

The OLT may thus be configured to indicate the number of frames following a current frame during which no transmission opportunities are allocated to a respective ONU, thereby effectively notifying the respective ONU about a low-power opportunity. This can, for example, be achieved by including a counter indicative for the number of frames until the next transmission opportunity. The current frame may refer to the frame during which the ONU is notified by the OLT.

According to an example embodiment, the OLT may be configured to notify the respective ONUs about low-power opportunities by communicating whether a next transmission opportunity is allocated to a traffic-bearing entity of the respective ONUs at least a predetermined amount of time in the future.

The OLT may thus be configured to indicate to the respective ONUs if no transmission opportunities are allocated to them during a predetermined amount of time following the notification. This can, for example, be achieved by including an indicator bit that is set to high or low depending on the amount of time until the next transmission opportunity. The predetermined amount of time may be defined by the transition times of the respective ONUs, i.e. the time it takes for an ONU to switch between a high-power mode and a low-power mode. The predetermine amount of time may, for example, be 4ms.

According to an example embodiment, the OLT may be configured to notify the respective ONUs about low-power opportunities by communicating a schedule of the transmission opportunities and/or the low-power opportunities allocated to the traffic-bearing entities of the respective ONUs during the next DBA interval.

The OLT may thus be configured to transmit the entire schedule of allocated transmission opportunities during the next DBA interval to the respective ONUs or the entire schedule of low-power opportunities during the next DBA interval. This provides the ONUs with the most detailed information at a higher overhead cost of transmitting an entire schedule.

According to an example embodiment, the OLT may further be configured to notify the respective ONUs about the low-power opportunities within a header of at least the first downstream frame at the start of the next DBA interval.

The OLT may thus be configured to notify the respective ONUs at the start of the next DBA interval. The header of at least the first downstream frame within the next DBA interval may thus include the number of successive frames until the next transmission opportunity of a traffic bearing entity of the ONU, an indicator whether a next transmission opportunity is allocated to a traffic-bearing entity at least a predetermined amount of time in the future, the schedule of the transmission opportunities, or the schedule of the low-power opportunities. Notifying the ONUs about the low-power opportunities within the first header of each successive DBA interval results in regular power cycling of the ONU circuitries, as they may be powered on at least once every DBA interval. This has the advantage that start-up times can remain efficient by avoiding long uninterrupted low-power mode operation that results in excessive thermal cool-down of the circuitries, which can negatively affect the start-up time.

According to an example embodiment, the OLT may further be configured to notify the respective ONUs about the low-power opportunities within the header of each downstream frame within the next DBA interval.

In doing so, the ONUs are able to receive updated information on low-power opportunities. The ONUs may, for example, receive from the OLT an updated counter within each downstream frame that is indicative for the number of successive frames until the next transmission opportunity allocated to one of their traffic bearing entities.

According to an example embodiment, the OLT may further be configured to notify the respective ONUs about the low-power opportunities within a start time field, a burst profile bit field, a fast wakeup indication bit field, or a portion of a grant size bit field of a bandwidth map according to the ITU-T G.9807 standard.

This has the advantage that the notifying can easily be implemented within existing PONs as structural modifications to the standardized bandwidth map, BWmap, field within the header of downstream frames are unnecessary.

Alternatively, the OLT may be configured to notify the respective ONUs about the low-power opportunities within an additional, dedicated field within the header of the downstream frames or within the BWmap field of the downstream frames. For example, a field 'OffFrames' may be added to the standardized fields of a BWmap for notifying the ONUs about the low-power opportunities.

According to an example embodiment, the OLT may further be configured to notify the respective ONUs about the low-power opportunities within a PLOAM.

According to an example embodiment, the OLT may further be configured to determine low-power opportunities for the respective ONUs based on the transmission opportunities allocated to the traffic bearing entities of the respective ONUs during the next DBA interval.

According to an example embodiment, the OLT may further be configured to receive transition times and/or optimal low-power intervals from the respective ONUs; and wherein the DBA engine is further configured to dynamically assign bandwidths to traffic-bearing entities within the respective ONUs as to provide low-power opportunities that are compatible with the transition times and/or the optimal low-power intervals.

The transition time of a respective ONU refers to the time it takes for an ONU to switch between a high-power mode and a low-power mode. The transition time of an ONU may be defined by the circuitries within the ONU, e.g. the hardware start-up and shut-down times of transmitter and/or receiver circuitries. The optimal low-power interval of a respective ONU refers to the optimal duration for an ONU to operate in a low-power mode as to optimize power saving for the ONU or the lifetime of the one or more switched circuitries. This may, for example, be related to temperature gradient effects or mean time between failure of the circuitries.

The respective ONUs may thus be configured to communicate the transition time and/or an optimal low-power interval to the OLT, e.g. upon request or upon joining the PON. The DBA engine may then be configured to take this into account when allocating transmission opportunities to the respective ONUs such that the frames between the transmission opportunities allow the ONUs to switch to a low-power mode according to the transition times and/or optimal low-power interval.

According to an example embodiment, the DBA engine may dynamically assign bandwidths constrained by at least a latency-related traffic descriptor parameter that determines a maximum interval between consecutive transmission opportunities allocated to a traffic-bearing entity; and wherein the latency-related traffic descriptor parameter is configured such that it is unrestrictive for the low-power opportunities.

The latency-related traffic descriptor may, for example, be the delay tolerance, DT, traffic descriptor. The latency-related traffic descriptor is typically set to 8 frames of 125µs, i.e. 1ms, in current PONs. As such, low-power opportunities would be limited to at most 8 frames in length, which would be restrictive for the power savings. The latency-related traffic descriptor parameter can be configured to be unrestrictive for the low-power opportunities by, for example, setting its value to the number of frames within the DBA intervals, e.g. 32 frames or 64 frames. In doing so, the maximum length of the low-power opportunities may correspond to all frames within the DBA interval.

According to an example embodiment, the OLT may further be configured to instruct respective ONUs to switch one or more circuitries to a low-power mode based on the low-power opportunities and transition times of the one or more circuitries.

The OLT may thus be configured to receive, from the respective ONUs, the transition times of the one or more circuitries, e.g. some or all off the transmitter and/or receiver circuitries. The OLT may then switch the mode of the ONUs between a high-power mode and a low-power mode based on the low-power opportunities and knowledge of the transition times by providing an instruction to the ONU. This has the advantage that the decision is processed at the OLT-side, which typically has higher computational capacities compared to the ONUs.

According to an example embodiment, the DBA engine may be configured to dynamically assign upstream bandwidths to traffic-bearing entities within the ONUs for a future DBA interval by allocating upstream transmission opportunities to the traffic-bearing entities within one or more upstream frames of the future DBA interval; and wherein the OLT is further configured to notify, at the latest at the start of a next DBA interval, the respective ONUs about one or more upstream low-power opportunities during the next DBA interval.

In other words, the DBA-triggered low-power modes according to the present disclosure may be applied to the upstream communication in a PON, i.e. to upstream dynamic bandwidth assignment.

According to a second example aspect, the invention relates to an optical network unit, ONU, configured to communicate in a passive optical network, PON, with an optical line terminal, OLT, according to the first aspect; wherein the ONU is configured to switch one or more circuitries to a low-power mode based on the low-power opportunities notified by the OLT.

The ONU may thus receive, from the OLT, information about the low-power opportunities during the next DBA interval. Based on this information, the ONU may decide to switch one or more circuitries to a low-power mode, e.g. transmitter and/or receiver circuitries.

According to an example embodiment, the ONU may further be configured to switch one or more circuitries to a low-power mode based on transition times of the one or more circuitries.

According to a third example aspect, the invention relates to a method for managing low-power modes of optical network units, ONUs, configured to communicate in a passive optical network, PON, with an optical line terminal, OLT; wherein the OLT comprises a dynamic bandwidth assignment, DBA, engine configured to dynamically assign bandwidths to traffic-bearing entities within the ONUs for a next DBA interval by allocating transmission opportunities to the traffic-bearing entities during one or more frames within the next DBA interval; the method comprising:
- by the OLT, determining low-power opportunities for the respective ONUs based on the allocated transmission opportunities during the next DBA interval; wherein low-power opportunities are periods of one or more successive frames during the next DBA interval without transmission opportunities allocated to the traffic-bearing entities of a respective ONU;
- by the OLT, notifying the respective ONUs about the low-power opportunities; and
- by the respective ONUs, switching one or more circuitries to a low-power mode based on the low-power opportunities.

### Brief Description of the Drawings

Fig. 1 shows a schematic block diagram of an example passive optical network, PON, with dynamic bandwidth assignment, DBA;
Fig. 2 shows steps performed by an optical line terminal, OLT, configured to enable DBA-triggered low-power modes in optical network units, ONUs, of a PON, according to example embodiments;
Fig. 3 shows a header of a downstream FS frame according to the ITU-T G.9807 standard used to notify the ONUs about low-power opportunities, according to example embodiments;
Fig. 4 shows a first example of the DBA-triggered low-power mode switching between a high-power mode and a low-power mode of an ONU based on low-power opportunities notified by the OLT, according to example embodiments; and
Fig. 5 shows a second example of the DBA-triggered low-power mode switching between a high-power mode and a low-power mode of an ONU based on low-power opportunities notified by the OLT, according to example embodiments.

### Detailed Description of Embodiment(s)

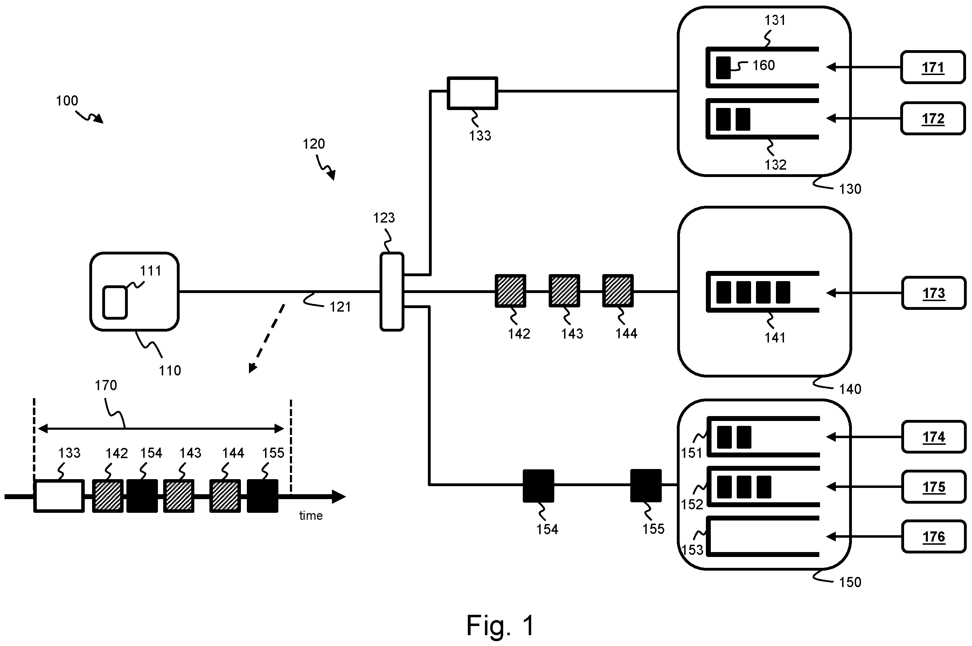

Fig. 1 shows a schematic block diagram of an example passive optical network, PON 100. The PON comprises an optical line terminal, OLT, 110 connected to a plurality of optical network units, ONUs, 130, 140, 150 via an optical distribution network, ODN 120. The ODN 120 may have a tree structure comprising an optical feeder fibre 121, one or more passive optical splitters/multiplexors 123, and a plurality of optical distribution fibres or drop fibres that connect the splitter/multiplexor 123 to the respective ONUs 130, 140, 150. In the downstream, the passive optical splitter/multiplexor 123 splits an optical signal coming from the OLT 110 into lower power optical signals for the connected ONUs 130, 140, 150, while in the upstream direction, the passive optical splitter/multiplexor 123 multiplexes the optical signals coming from the connected ONUs 130, 140, 150 into a burst signal for the OLT 110. In this example, the OLT 110 is connected to three ONUs 130, 140, 150, however, the OLT 110 may be connected to fewer or more ONUs.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time- and wavelength-division multiplexing, TWDM.

In time-division multiplexing, TDM, the telecommunication medium 121 is shared in time between the ONUs 130, 140, 150 in the upstream. To this end, transmission opportunities 133, 142, 143, 144, 154, 155 are allocated to the respective ONUs 130, 140, 150 during which the respective ONUs 130, 140, 150 are allowed to transmit data to the OLT 110. Transmission opportunities may also be referred to as timeslots or bursts. For example, ONU 140 is allowed to transmit upstream data during the transmission opportunities 142, 143, 144.

The respective ONUs 130, 140, 150 comprise one or more traffic-bearing entities 131, 132, 141, 151, 152, 153 where data packets 160 originating from a connected service 171 - 176 or application await their turn to be transmitted to the OLT 110. The one or more traffic-bearing entities 131, 132, 141, 151, 152, 153 may be transmission containers, also referred to as T-CONTs. Transmission containers are ONU-objects that represent a group of logical connections within an ONU 130, 140, 150 that appear as a single entity for the purpose of upstream bandwidth assignment in a passive optical network.

The transmitted data during a transmission opportunity 133, 142, 143, 144, 154, 155 may thus originate from traffic-bearing entities 131, 132, 141, 151, 152, 153 within the associated ONUs 130, 140, 150. A respective traffic-bearing entity 131, 141, 151 is allowed to transmit data to the OLT 110 during a dedicated transmission opportunity 133, 142, 143, 144, 154, 155 that may recur in time, i.e. during a repeating timeslot. In between consecutive transmission opportunities associated with a certain traffic-bearing entity, e.g. 154 and 155, one or more non-overlapping transmission opportunities associated with different transmission queues may be allocated, e.g. 143 and 144.

The transmission opportunities 133, 142, 143, 144, 154, 155 may be allocated by dynamic bandwidth assignment, DBA, sometimes also referred to as dynamic bandwidth allocation. To this end, the OLT 110 may comprise a DBA engine 111 or DBA functional module that executes a DBA algorithm. The DBA engine 111 may determine or estimate a buffer occupancy of the traffic-bearing entities 131, 132, 141, 151, 152, 153 by collecting in-band status reports, by monitoring the number of idle upstream frames, or both. The DBA algorithm may implement a DBA model that defines how the assigned bandwidth for the traffic-bearing entities 131, 132, 141, 151, 152, 153 is to be determined, e.g. according to the reference DBA model of the ITU-T G.9807.1 standard. The DBA engine 111 typically also determines the size and timing of the upstream transmission opportunities 133, 142, 143, 144, 154, 155 such that the determined bandwidths are allocated to the traffic-bearing entities 131, 132, 141, 151, 152, 153.

The DBA engine 111 typically performs the dynamic bandwidth assignment for a future DBA interval 170, also referred to as DBA cycle. This is achieved by predicting the bandwidth demand throughout the future DBA interval and allocating transmission opportunities 133, 142, 154, 143, 144, 155 throughout that future DBA interval 170. A DBA interval can comprise 32 to 64 frames of 125µs, i.e. the duration of a DBA interval can be around 4ms to 8ms.

The bandwidth demands may be determined or predicted based on a reported buffer occupancy, e.g. dynamic bandwidth report upstream, DBRu, according to the ITU-T G.9807.1 standard. Alternatively, the bandwidth demands may be determined based on monitored traffic from a respective ONU or T-CONT, e.g. based on the amount of payload data transmitted during one or more transmission opportunities, and/or idle data. A bandwidth mapper typically converts the allocated transmission opportunities into bandwidth maps for the respective upstream frames, i.e. on a per frame basis. The bandwidth map for the next upstream frame is then communicated to the ONUs within the FS header of the downstream frames.

ONUs 130, 140, 150 may further be configured to support low-power management modes. Low-power management modes refer to mechanisms that help reduce power consumption within the PON 100 by operating the ONUs 130, 140, 150 in low-power modes, typically during periods of minimal traffic or inactivity. To control the power management behaviour of an ONU 130, 140, 150, the ONU and the OLT typically 110 maintain a pair of power management state machines. The ONU state machine and the corresponding OLT state machine operate in partial state alignment. The primary signalling mechanism used to coordinate the ONU and OLT state machines is based on PLOAM messages. The output PLOAM messages are generated and queued for transmission at the time of state transitions. The states of both ONU and OLT state machines can be classified into two mutually exclusive subsets: the high-power mode and the low-power modes. Typically, after the OLT 110 grants an ONU permission for low-power operation, e.g. by communicating a 'sleep aware (SA) ON' message to the ONU, the ONU is allowed to decide when to enter a low-power mode. In other words, the ONUs decide when they switch from and to low-power modes.

Typical low-power management modes in PONs include cyclic sleep mode, doze mode, and watchful sleep mode. In cyclic sleep mode, the upstream transmission and downstream reception are turned off during a sleep interval, while both upstream transmission and reception are active during an aware interval. In doze mode, the upstream transmission is turned off during a listen interval, while both upstream transmission and downstream reception are active during an aware interval. The watchful sleep mode combines the characteristics of both the doze mode and the cyclic sleep mode. It reuses the states and transitions of the doze mode on the ONU side and those of the cyclic sleep mode on the OLT side. Specifically, in the watchful sleep mode, the upstream transmission and downstream reception are active and fully operational during an aware interval. During the sleep intervals of the watch interval, both upstream transmission and downstream reception are turned off. During the non-sleep intervals of the watch interval, the upstream transmission is off, while the downstream reception is active.

The aware intervals and the non-sleep intervals are typically only used for handshakes between the OLT and the ONU intended for keep-alive maintenance and ranging. In other words, no user data is exchanged during those aware intervals and non-sleep intervals. Transitioning back to full-power data communication typically requires secondary messages such as, for example, a frame waiting indication, FWI, a link waiting indication, LWI, or a 'SleepAware (OFF)' signal. These low-power management modes thus have the problem that they are intended for extended periods of minimal or sporadic traffic, as transitioning into or out of the low-power modes requires secondary messaging that can introduce substantial latency and/or jitter. As such, switching to and from these low-power modes affects the quality of service, QoS, significantly as soon as the traffic increases beyond the minimal or sporadic level. Thus, it is a problem that the current low-power management modes do not scale well with traffic and are even non-functional in low to high traffic.

Another problem is that switching from and to low-power modes is decided by the respective ONUs, based on information that is limited in temporal scope and that is restricted to the traffic at the respective ONUs themselves. Therefore, the low-power modes are applied conservatively which limits the potential power savings.

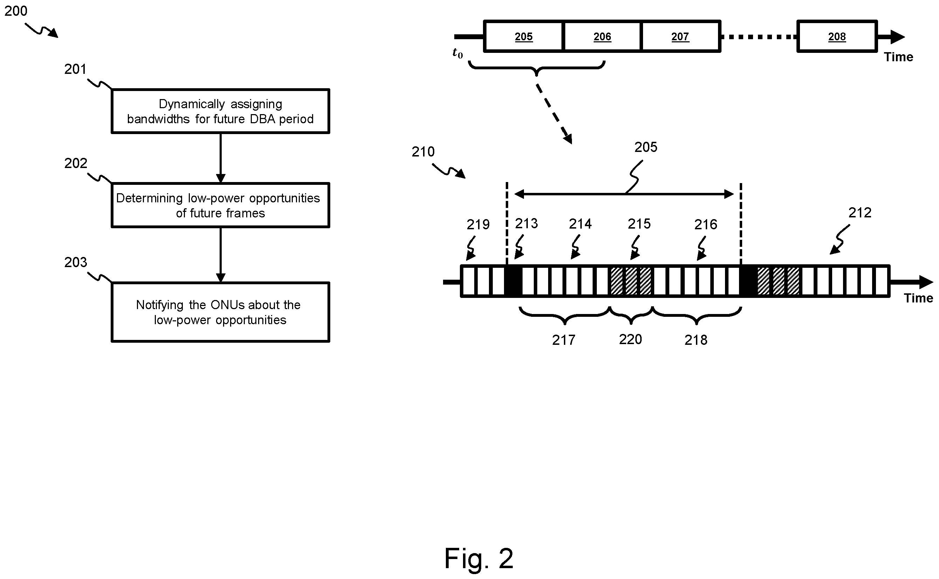

Fig. 2 shows steps 200 performed by an optical line terminal, OLT, configured to enable DBA-triggered low-power modes in ONUs of a PON, according to example embodiments. The OLT comprises a DBA engine configured to dynamically assign bandwidths 201 to traffic-bearing entities within the ONUs for a future DBA interval 205 - 208 by allocating transmission opportunities 220 to the traffic-bearing entities within one or more frames 215 of the future DBA interval 205-208. A DBA interval 205 - 208 refers to a set of successive frames for which the DBA engine dynamically assigns bandwidths together. A DBA interval may, for example, comprise 32 or 64 successive frames. It will be apparent that the 16 successive frames 213 - 216 within DBA interval 205 shown in Fig. 2 is merely an illustrative example. The respective successive frames 213 - 216 may, for example, be physical layer, PHY-, frames. The respective successive frames 213 - 216 may have a predetermined length, e.g. 125µs.

The DBA intervals 205 - 208 for which the DBA engine dynamically assigns bandwidth may be cyclic, i.e. they may successively be repeated in time as illustrated in Fig. 2. The successive DBA intervals 205 - 208 may further have different lengths and/or partially overlap. The DBA engine dynamically assigns bandwidth in advance, i.e. for future DBA intervals 205 - 208 relative to a current timestep *t*₀. At the current timestep *t*₀, the DBA engine may assign bandwidth for the next DBA interval 205, i.e. the immediate upcoming DBA interval relative to the current time step *t*₀, or for any subsequent DBA interval 206, 207, 208 after the next DBA interval 205, i.e. the second 206, third 207, or n-th 208 future DBA interval following the next DBA interval 205.

The DBA engine may thus, at timestep *t*₀, dynamically assign bandwidth to respective ONUs in a PON by allocating transmission opportunities 220 within one or more frames 215 of a future DBA interval 205-208. This may be the next DBA interval 205 but may also be another future DBA interval 206 - 208. In other words, the transmission opportunity 220 may have been allocated by the DBA engine earlier than the current timestep *t*₀.

After allocating the transmission opportunities 220 for the next DBA interval 205, the DBA engine is thus already aware of the future frames 214, 216 within the next DBA interval 205 that will be substantially free of communication between a certain ONU and the OLT. Periods 217, 218 of successive frames 214, 216 without allocated transmission opportunities are thus excellent candidates for operating the ONU in a low-power mode, as no communication is scheduled. A low-power mode refers to a power-saving operational state of the ONU wherein one or more circuitries of the ONU are not fully responsive to reduce their energy consumption, e.g. standby, asleep, or turned off completely. Periods 217, 218 are referred to as low-power opportunities. Low-power opportunities 217, 218 comprise one or more frames. Low-power opportunities may comprise a fractional number or non-integer number of frames, e.g. 1.2 frames or 3.45 frames. Thus, by allocating transmission opportunities 220 for the traffic-bearing entities of an ONU, the DBA engine has indirectly determined the low-power opportunities 217, 218 for the ONU. It will be apparent that the OLT may also be configured to actively determine 202 the low-power opportunities 217, 218, i.e. by taking the inverse of the frame allocations 215.

The OLT is further configured to notify 203 the respective ONUs in the PON about the low-power opportunities 217, 218. The notifying occurs at the latest at the start of the next DBA interval 205, i.e. at the latest within the first downstream frame 213 of the next DBA interval 205. The notifying may occur earlier, e.g. within a frame 219 during the DBA interval preceding the next DBA interval 205. This allows the ONU to enter a power-saving state without missing a transmission opportunity to transmit upstream frames to the OLT by switching to a low-power mode during the low-power opportunities 217, 218. In other words, advanced awareness of the upcoming transmission opportunities at the ONU-side allows the respective ONUs to switch to a low-power mode during the low-power opportunities 217, 218 and to timely switch back to a high-power mode during the allocated transmission opportunities 220. A high-power mode refers to an operational state of the ONU wherein the circuitries of the ONU are fully responsive, i.e. responding to all upstream bandwidth allocations.

This has the advantage that the ONUs can switch from and to a low-power mode without substantial impact on the quality-of-service, QoS, as it does not require secondary messaging that can introduce latency and/or jitter. It is a further advantage that the information already determined by a typical DBA engine is exploited to allow low-power mode management of ONUs in a PON. It is a further advantage that switching from and to low-power modes is driven by the OLT considering extended temporal knowledge of the upcoming traffic schedule. This has the further advantage that low-power modes do not have to be applied conservatively, as it is known in advance when the next communication with the ONU is planned. It is a further advantage that the DBA-triggered low-power modes scale aggressively with the amount of traffic within the PON to optimize energy savings. It is a further advantage that this can easily be implemented in existing PONs.

The ONUs can be notified about one or more low-power opportunities 217, 218 anywhere within the next DBA interval. Notifying the ONUs about low-power opportunities 217, 218 may be achieved in several ways. The OLT may be configured to communicate a number of successive frames until a next transmission opportunity is allocated to a traffic bearing entity. For example, the OLT may communicate in frame 213 that the next transmission opportunity 220 is allocated after 6 successive frames 214.

Alternatively, notifying the ONUs about low-power opportunities 217, 218 may be achieved by communicating whether a next transmission opportunity is allocated at least a predetermined amount of time in the future. For example, if the duration of low-power opportunity 217 exceeds the predetermined amount of time, e.g. 4ms, the OLT may indicate this to the ONU. This can, for example, be achieved by including an indicator bit in a downstream frame that is set to high or low depending on whether the predetermined amount of time is exceeded or not.

Alternatively, notifying the ONUs about low-power opportunities 217, 218 may be achieved by communicating a schedule of the low-power opportunities 217, 218 during the next DBA interval 205. The ONUs may also receive a schedule of the transmission opportunities 220 during the next DBA interval 205, which allows the ONUs to deduct the low-power opportunities 217, 218 as the successive frames 214, 216 without transmission opportunities. This provides the ONUs with the most detailed information at a higher overhead cost of transmitting an entire schedule.

The notifying by the OLT may further be achieved by including information about the low-power opportunities 217, 218 within the header of at least the first downstream frame 213 within each DBA interval 205 - 208. The ONUs within the PON may thus be configured to switch to a high-power mode at the start of each new DBA interval 205 - 208 to receive information about the low-power opportunities 217, 218. This results in regular power cycling of the ONU circuitries, as they may be powered on at least once every DBA interval 205 - 208. This has the advantage that start-up times can remain efficient by avoiding long uninterrupted low-power mode operation that results in excessive thermal cool-down of the circuitries, which negatively affects the start-up time.

The header of the first downstream frame 213 within the next DBA interval 205 may thus include the number of successive frames until the next transmission opportunity of a traffic bearing entity of the ONU, an indicator whether a next transmission opportunity is allocated to a traffic-bearing entity at least a predetermined amount of time in the future, the schedule of the transmission opportunities during the next DBA interval 205, or the schedule of the low-power opportunities during the next DBA interval 205.

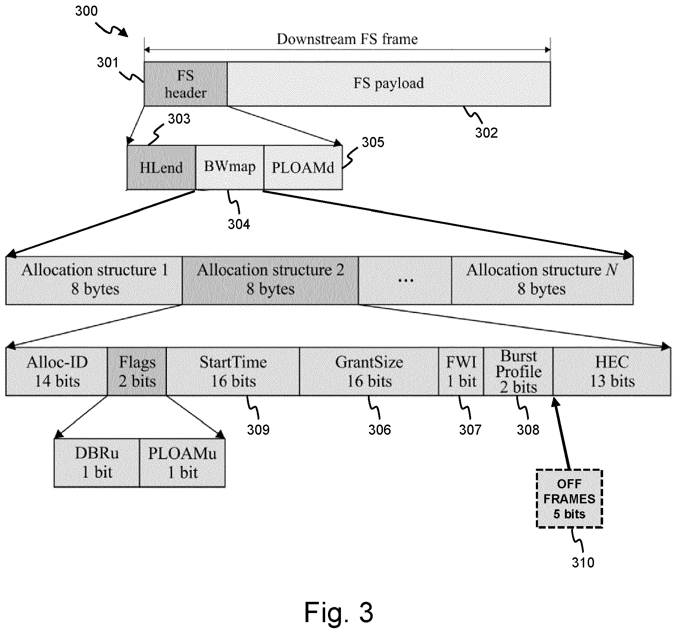

Fig. 3 shows the structure of a downstream FS frame 300 according to the ITU-T G.9807 standard. The downstream FS frame 300 comprises a header 301 and a payload 302. The notified information about the low-power opportunities may be included within the BWmap field 304 of the header 301 according to the ITU-T G.9807 standard. Preferably, the notified information about the low-power opportunities may be included within a start time field 309, a burst profile bit field 308, a fast wakeup indication bit field 307, or a portion of a grant size bit field 306 of a bandwidth map. For example, the fast wakeup indication bit field 307 may be used as the indicator whether a next transmission opportunity is allocated to a traffic-bearing entity at least a predetermined amount of time in the future. In another example, at least some of the bits within the grant size bit field 306 may be used to indicate the number of successive frames until the next transmission opportunity. Alternatively, the notified information about low-power opportunities may be included within the PLOAMd field 305 of the FS header 301. This has the advantage that the notifying can easily be implemented within existing PONs as structural modifications to the FS header 301 within downstream frames are unnecessary.

Alternatively, the OLT may be configured to notify the respective ONUs about the low-power opportunities within an additional, dedicated field 310 within the BWmap field 304 within the downstream frames 300. For example, a field 'OffFrames' 310 may be inserted within the standard fields of a BWmap 304 especially for notifying the ONUs about the low-power opportunities. The 'Off Frames' field 310 may, for example, comprise five bits that indicate the number of frames following the current frame in which no grant will be allocated by the DBA functionality. Five bits allows notifying the ONUs about low-power opportunities for the upcoming 31 frames.

Upon receiving the information about the low-power opportunities, the ONUs may switch from and to low-power modes. This may, for example, be achieved by enabling and disabling the Transmitter disable, TXDIS, pin in a typical ONU and/or the Burst Enable, BEN, pin in a typical ONU. Most ONUs already have controllers that allow controlling the TXDIS pin and BEN pin. Alternatively, a new dedicated control pin or channel control may be exploited to control the low-power modes of the ONU. Alternatively, the ONUs may be instructed to switch one or more circuitries to a low-power mode by the OLT directly, e.g. by receiving a control signal.

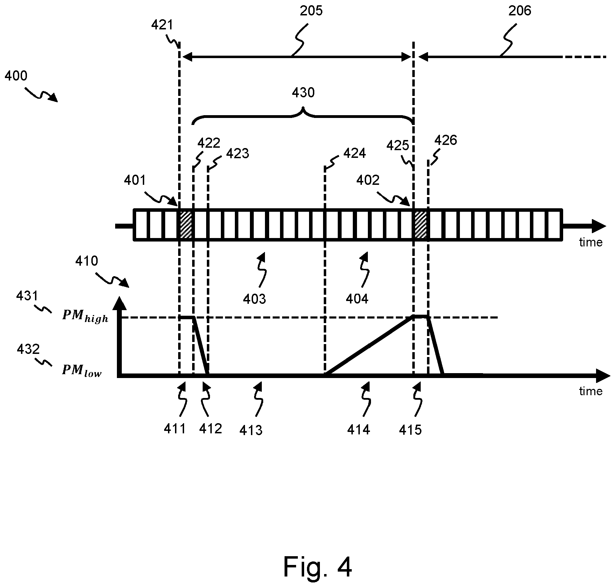

Fig. 4 shows an example 400 of the switching between a high-power mode 431 and a low-power mode 432 of an ONU based on the low-power opportunities 430 notified by the OLT, according to example embodiments. The ONU may receive information about low-power opportunity 430 within the header of the first downstream frame 401 of the next DBA interval 205. During this first frame 401, the ONU may thus be configured to operate 411 in the high-power mode 431 such that it can receive and process the notified information on the low-power opportunities. The header of frame 401 may indicate that there is no transmission opportunity allocated for the traffic-bearing entities of the ONU during the next DBA interval 205, i.e. unallocated frames 403, 404 form a low-power opportunity 430. As such, the ONU may decide to switch one or more of its circuitries to a low-power mode 413 after the first frame 401, i.e. at timestep 422.

As illustrated in Fig. 4, shutdown of circuitries is typically not instant and is subject to a transition time 412 characteristic for the circuitries. In this example, the transition time 412 of the circuitries corresponds to approximately 1 frame. At timestep 423, the one or more circuitries have switched to the low-power mode 432 and are thus operating in a power-saving state 413. Similarly, turning on one or more circuitries is typically also not instant and subject to a transition time 414 characteristic for the circuitries. In this example, the transition time 414 of the circuitries corresponds to approximately 6 frames. As such, the ONU may be configured to initiate 424 the switch back to the high-power mode 431 sufficiently early such that the one or more circuitries are fully operational again in the high-power mode 431 when they are expected to transmit or receive data, i.e. after the low-power opportunity 430. In the illustrated example of Fig. 4, timely turning the one or more circuitries back on allows the ONU to receive information on the low-power opportunities of the DBA interval 206 following DBA interval 205, as this information may be included within the header of frame 402. To be able to account for the transition times 412, 414 of the one or more circuitries within the ONU, the OLT may further be configured to receive information on these transition times from the ONUs in the PON. The OLT may, for example, request this information from ONUs when they join the PON.

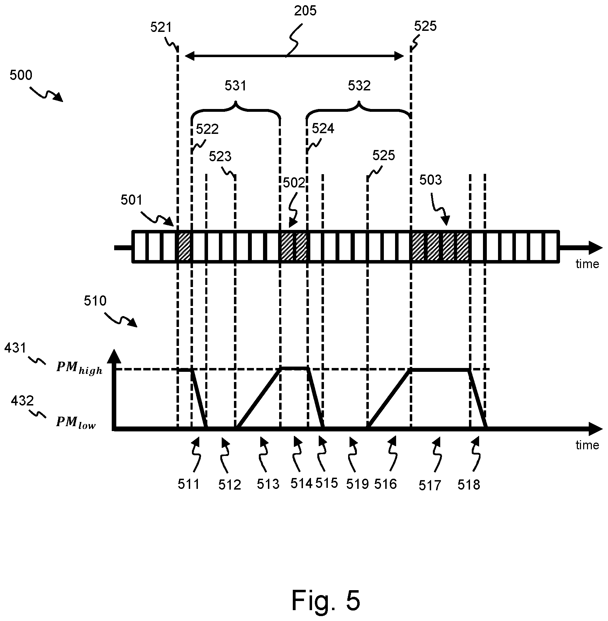

Fig. 5 shows an other example 500 of the switching between a high-power mode 431 and a low-power mode 432 of an ONU based on the low-power opportunities 531, 532 notified by the OLT, according to example embodiments. The ONU may receive information about the first low-power opportunity 531 within the header of the first downstream frame 501 of the next DBA interval 205. This header may indicate that the next transmission opportunity 502 for a traffic-bearing entity of the ONU is allocated 6 frames from the first frame 501. The ONU may then switch one or more circuitries to a low-power mode 432 for a brief period 512, taking into account the transition times 511, 513 of the one or more circuitries such that the allocated transmission opportunity 502 can be respected.

The OLT may further be configured to notify the ONU about low-power opportunities within the header of each downstream frame within the next DBA interval 205. In doing so, the ONU is able to receive updated information on low-power opportunities whenever it returns to the high-power mode 431. In the example illustrated in Fig. 5, the ONU thus receives updated information on the second low-power opportunity 532 within the headers of the downstream frames received while the ONU is operating in high-power mode 514, i.e. during the allocated transmission opportunity 502. The headers within these two successive frames 502 may indicate that the next transmission opportunity 503 is allocated at 7 and 6 frames from the current frame, respectively.

Some circuitries may suffer from excessive wear due to relatively highfrequency power switching. It may, for example, be better for the lifetime of the one or more circuitries of the ONU to not switch on 523, 525 and off 522, 524 twice during one DBA interval 205 as illustrated in the example of Fig. 5. To this end, the OLT may further be configured to receive an optimal low-power interval from the ONU. For example, the circuitries in the example of Fig. 5 may have a longer lifetime if they are only switched on and off once every 10 frames. The ONU may communicate this optimal low-power interval to the OLT, e.g. upon request or upon joining the PON, and the OLT may provide low-power opportunities 531, 532 that are compatible with this optimal low-power interval to the best extent possible. In the example of Fig. 5 this could, for example, be achieved by allocating the transmission opportunity 502 during the last two frames of the next DBA interval 205 such that the circuitries only need to switch once between the high-power 431 and low-power mode 432 during the DBA interval 205. It will be apparent that it may not always be possible to provide low-power opportunities according to the optimal low-power intervals, e.g. when the traffic on the PON is too high.

As an illustrative example, the potential power savings of the DBA-triggered low-power modes according to the present are discussed for two example configurations within a 25 GPON. In both example configurations, the ONUs use a commercial laser driver with a start-up time of 2ms, i.e. 16 frames of 125µs, and a shut-down time of 100µs, i.e. approximately 1 frame of 125µs. The DBA intervals comprise 32 frames of 125µs.

In the first example configuration, the grant rate and size correspond to 1 full frame of allocated transmission opportunities within the DBA interval, i.e. 1/32 frames. The start-up of the laser driver takes 16/32 frames and the shut-down takes 1/32 frames. Therefore, 14/32 frames remain for the laser driver to be turned off, i.e. operate in a low-power mode. The DBA-triggered low-power mode thus allows around 44% power saving of the laser driver while still allowing around 312.5 Mbps over that ONU.

The second example configuration illustrates more traffic at the ONU with 4 full frames of allocated transmission opportunities within the DBA interval, i.e. 4/32 frames. Therefore, only 11/32 frames remain for the laser driver to be turned off. The DBA-triggered low-power mode thus allows around 34% power saving of the laser driver while still allowing around 1.25 Gbps over that ONU.

A PON can, for example, comprise up to 30 million ONUs. The typical average traffic per ONU is around 100 - 200 Mbps. So, the 312.5 Mbps of the first example configuration would certainly meet the average bandwidth demands of the ONUs in a PON. As such, the potential power savings of the DBA-triggered low-power modes applied to all ONUs in a PON can be very large.

It will be apparent that the DBA-triggered low-power modes according to the present disclosure may be applied to upstream communication in a PON, i.e. to upstream dynamic bandwidth assignment.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. An optical line terminal (110), OLT, configured to communicate in a passive optical network (100), PON, with optical network units (130, 140, 150), ONUs; wherein the OLT comprises a dynamic bandwidth assignment, DBA, engine (111) configured to dynamically assign bandwidths (201) to traffic-bearing entities (131, 132, 141, 151, 152, 153) within the ONUs for a future DBA interval (205 - 208) by allocating transmission opportunities (220) to the traffic-bearing entities within one or more frames (215) of the future DBA interval (205 - 208); wherein a DBA interval comprises at least two successive frames; and **characterized in that** the OLT is configured to notify, at the latest at the start of a next DBA interval (205), the respective ONUs about one or more low-power opportunities (217, 218) during the next DBA interval; wherein low-power opportunities are periods of one or more successive frames (214, 216) during the next DBA interval (205) without transmission opportunities allocated to the traffic-bearing entities of a respective ONU.

2. The optical line terminal, OLT, according to claim 1, wherein the OLT is configured to notify the respective ONUs about low-power opportunities (217, 218) by communicating a number of successive frames (214) until a next transmission opportunity (220) is allocated to a traffic bearing entity of the respective ONUs.

3. The optical line terminal, OLT, according to claim 1, wherein the OLT is configured to notify the respective ONUs about low-power opportunities (217, 218) by communicating whether a next transmission opportunity (220) is allocated to a traffic-bearing entity of the respective ONUs at least a predetermined amount of time in the future.

4. The optical line terminal, OLT, according to claim 1, wherein the OLT is configured to notify the respective ONUs about low-power opportunities (217, 218) by communicating a schedule of the transmission opportunities and/or the low-power opportunities (217, 218) allocated to the traffic-bearing entities of the respective ONUs during the next DBA interval (205).

5. The optical line terminal, OLT, according to any of the preceding claims, wherein the OLT is further configured to notify the respective ONUs about the low-power opportunities (217, 218) within a header of at least the first downstream frame (213) at the start of the next DBA interval (205).

6. The optical line terminal, OLT, according to claim 5, wherein the OLT is further configured to notify the respective ONUs about the low-power opportunities (217, 218) within the header of each downstream frame (213, 214, 215, 216) within the next DBA interval (205).

7. The optical line terminal, OLT, according to claim 5 or 6, wherein the OLT is further configured to notify the respective ONUs about the low-power opportunities (217, 218) within a start time field (309), a burst profile bit field (308), a fast wakeup indication bit field (307), or a portion of a grant size bit field (306) of a bandwidth map (304) according to the ITU-T G.9807 standard.

8. The optical line terminal, OLT, according to any of claims 1 - 4, wherein the OLT is further configured to notify the respective ONUs about the low-power opportunities within a PLOAM (305).

9. The optical line terminal, OLT, according to any of the preceding claims, further configured to determine (202) low-power opportunities (217, 218) for the respective ONUs based on the transmission opportunities (220) allocated to the traffic bearing entities of the respective ONUs during the next DBA interval (205).

10. The optical line terminal, OLT, according to any of the preceding claims, further configured to receive transition times and/or optimal low-power intervals from the respective ONUs; and wherein the DBA engine is further configured to dynamically assign bandwidths to traffic-bearing entities within the respective ONUs as to provide low-power opportunities that are compatible with the transition times and/or the optimal low-power intervals.

11. The optical line terminal, OLT, according to any of the preceding claims, wherein the DBA engine dynamically assigns bandwidths constrained by at least a latency-related traffic descriptor parameter that determines a maximum interval between consecutive transmission opportunities allocated to a traffic-bearing entity; and wherein the latency-related traffic descriptor parameter is configured such that it is unrestrictive for the low-power opportunities.

12. The optical line terminal, OLT, according to any of the preceding claims, wherein the DBA engine is configured to dynamically assign upstream bandwidths to traffic-bearing entities within the ONUs for a future DBA interval by allocating upstream transmission opportunities to the traffic-bearing entities within one or more upstream frames of the future DBA interval; and wherein the OLT is further configured to notify, at the latest at the start of a next DBA interval, the respective ONUs about one or more upstream low-power opportunities during the next DBA interval.

13. An optical network unit, ONU, configured to communicate in a passive optical network, PON, with an optical line terminal, OLT, according to any of claims 1 - 12; wherein the ONU is configured to switch (422, 522, 524) one or more circuitries to a low-power mode (413, 512, 519) based on the low-power opportunities (430, 531, 532) notified by the OLT.

14. The optical network unit, ONU, according to claim 13, further configured to switch (422, 522, 524) one or more circuitries to a low-power mode (413, 512, 519) based on transition times (412, 414, 512, 513, 515, 516) of the one or more circuitries.

15. A method for managing low-power modes of optical network units (130, 140, 150), ONUs, configured to communicate in a passive optical network (100), PON, with an optical line terminal (110), OLT; wherein the OLT comprises a dynamic bandwidth assignment, DBA, engine (111) configured to dynamically assign bandwidths (201) to traffic-bearing entities (131, 132, 141, 151, 152, 153) within the ONUs for a future DBA interval (205 - 208) by allocating transmission opportunities (220) to the traffic-bearing entities within one or more frames (215) of the future DBA interval (205 - 208); wherein a DBA interval comprises at least two successive frames; the method comprising:
- by the OLT (110), determining (202) low-power opportunities (217, 218) for the respective ONUs based on the allocated transmission opportunities (220) during a next DBA interval (205); wherein low-power opportunities are periods of one or more successive frames (214, 216) during the next DBA interval without transmission opportunities allocated to the traffic-bearing entities of a respective ONU;
- by the OLT, notifying (203) the respective ONUs about the low-power opportunities; and
- by the respective ONUs, switching one or more circuitries to a low-power mode based on the low-power opportunities (217, 218).
